# EUROPÄISCHE PATENTSCHRIFT

(11) **EP 1 944 471 B1**
(45) Veröffentlichungstag und Bekanntmachung des Hinweises auf die Patenterteilung: **02.09.2009**
(21) Anmeldenummer: 07000381.9
(22) Anmeldetag: 09.01.2007
(51) Int. Cl.: F01D 5/30

(54) **Axialer Rotorabschnitt für einen Rotor einer Turbine**
Axial rotor section for a rotor in a turbine
Partie axiale d'une rotor de turbine

(43) Veröffentlichungstag der Anmeldung: 16.07.2008
(73) Patentinhaber: SIEMENS AKTIENGESELLSCHAFT, 80333 München (DE)
(72) Erfinder: Brücher, Marcus, Dr., 13505 Berlin (DE); Buschmann, Axel, Dr., 45355 Essen (DE); Föhringen, Andreas, 14052 Berlin (DE); Kienast, Dieter, 10627 Berlin (DE); Raschnewski, Martin, 13187 Berlin (DE); Reisener, Joachim, 13591 Berlin (DE); Remmert, Wilfried, 13503 Berlin (DE); Schröder. Peter, 45307 Essen (DE)

(56) Entgegenhaltungen:
- EP-A- 1 284 339
- WO-A-87/01761
- DE-A1- 1 963 364
- DE-A1- 3 033 768
- JP-A- 58 035 203
- JP-A- 2000 186 502
- US-A- 5 713 721

## Beschreibung

Die Erfindung betrifft einen axialen Rotorabschnitt für einen Rotor einer Turbine, mit einer an zwei stirnseitigen ersten Seitenflächen angrenzenden äußeren Umfangsfläche, in der über dem Umfang verteilte, sich in Axialrichtung erstreckende Laufschaufelhaltenuten für Laufschaufeln der Turbine vorgesehen sind und mit einer zu einer der beiden ersten Seitenflächen radial weiter innen benachbarten weiteren Umfangsfläche, in der zumindest eine radial nach außen offene in Umfangsrichtung erstreckende Dichtungsnut mit mehreren darin eingesetzten, die stirnseitigen Öffnungen der Laufschaufelhaltenuten zumindest teilweise überdeckenden Dichtelementen vorgesehen ist.

Ein gattungsgemäßer axialer Rotorabschnitt für eine Turbine bzw. ein gattungsgemäßer Rotor ist beispielsweise aus der Offenlegungsschrift DE 1 963 364 bekannt. Der von einer Rotorscheibe gebildete Rotorabschnitt ist mit in Axialrichtung verlaufenden Haltenuten für Laufschaufeln der Turbine ausgestattet, wobei stirnseitig eine endlos umlaufende Aufnahmenut für Dichtbleche vorgesehen ist. An einer Seitenwand der Aufnahmenut sind mehrere in Umfangsrichtung gleichmäßig verteilte Vorsprünge vorgesehen, die den Nutgrund der Aufnahmenut teilweise überdecken. Ferner ist aus der Offenlegungsschrift ein plattenförmiges Dichtblech bekannt, welches an seiner radial innen angeordneten Innenkante eine beidseitige Aufdickung aufweist, die annähernd der Nutbreite der Aufnahmenut entspricht. Die Aufdickung ist dabei in Umfangrichtung betrachtet, abschnittsweise von Ausnehmungen unterbrochen, welche zu den Vorsprüngen der Aufnahmenut korrespondierend breit ausgebildet sind. Hierdurch lässt sich das Dichtblech durch eine rein radiale Bewegung von Außen in die Aufnahmenut einsetzen und nach einer Verschiebung in Umfangsrichtung, welche ungefähr der Breite des Vorsprungs entspricht, mit diesem verhaken. Die Aufdickung des Dichtbleches hintergreift dann die Vorsprünge der Aufnahmenut, so dass das Dichtblech sich nicht nach außen bewegen kann. Zur Montage aller Dichtbleche sind diese sukzessive in die Aufnahmenut einzusetzen und erst anschließend gemeinschaftlich in Umfangsrichtung zu verschieben. Hierdurch wird die Notwendigkeit eines Dichtblechschlosses vermieden. Nach dem Einsetzen und Verschieben der Dichtbleche werden die Laufschaufeln in ihre Nuten eingeschoben. Anschließend werden die Außenkanten der Dichtbleche in plattformseitige Nuten der Laufschaufeln eingeschoben, so dass diese gegen eine Axialverschiebung gesichert sind. Zum Abschluss der Montage werden die Dichtbleche mittels einer Schraube in ihrer angehobenen Stellung fixiert. Jede Aufweitung liegt dann am Vorsprung an. Mittels dieser Anordnung der Bauteile kann ein erster Raum, welcher zwischen dem Dichtblech und der Stirnseite der Rotorscheibe liegt, gegenüber einem zweiten, jenseits des Dichtbleches liegenden, zweiten Raum zur Führung unterschiedlicher Medien abgetrennt werden. Zur Erreichung einer besonders guten Abdichtung liegt das Dichtblech mit seiner Aufweitung an derjenigen Seitenwand der Aufnahmenut an, an welcher kein Vorsprung vorgesehen ist. Außerdem sorgt eine innere, konisch verlaufende Kante des Vorsprungs dafür, dass das Dichtblech unter Fliehkrafteinfluss an die vorsprunglose Seitenwand der Aufnahmenut gepresst wird.

Ein Nachteil der bekannten Anordnung ist die aufwändige Konstruktion der Seitenflächen der Rotorscheibe und des Dichtbleches mit Vorsprüngen und Ausnehmungen. Ein weiterer Nachteil ist die Verwendung einer Schraube zur Sicherung der Dichtbleche gegen eine Verschiebung in Umfangsrichtung. Aufgrund der zwischen Betrieb und Stillstand auftretenden thermischen Wechselbeanspruchung und aufgrund des durch die Turbine strömenden Heißgases kann es zu Korrosions- und Festigkeitsproblemen in der Verschraubung kommen. Unter Umständen kann diese nicht bestimmungsgemäß gelöst werden. In diesem Fall wird die Schraube ausgebohrt, wobei dieser Vorgang in der Regel am noch in der unteren Gehäusehälfte der Gasturbine liegenden Rotor durchgeführt wird. Dabei kann es passieren, dass Späne in die untere Gehäusehälfte fallen, welche beim nachfolgenden Betrieb ungewollte Verunreinigungen herbeiführen können.

Ferner ist aus der FR 2 524 933 eine Sicherung für Laufschaufeln gegen eine Axialverschiebung bekannt, die mittels eines in Umfangsrichtung verschiebbaren Bleches gehalten werden. Die darin gezeigte Anordnung ist jedoch nicht geeignet, einen scheibennahen Raum gegenüber einem jenseits des Bleches vorhandenen Raum abzudichten.

Des Weiteren ist aus der Offenlegungsschrift DE 30 33 768 A1 eine Läuferbaugruppe für eine Läuferscheibe einer Turbine bekannt, welche einen einstückigen Dichtring zur Axialsicherung von Laufschaufeln aufweist. Aufgrund des einstückigen Dichtrings ist dieser jedoch lediglich für Flugzeuggasturbinen geeignet, da diese in Axialrichtung durch Stapeln zusammengesetzt werden. Stationäre Gasturbinen werden dagegen aus zwei Gehäusehälften zusammengesetzt, die den vollständig montierten Rotor umgreifen. Der einstückige Dichtring der DE 30 33 768 A1 wird nach Art eines Bajonett-Verschlusses mit der Turbinenscheibe verhakt. Hierzu sind sowohl an der Turbinenscheibe als auch am Dichtring entlang des Umfang verteilte Vorsprünge und Ausnehmungen abwechseln angeordnet. Zur Montage wird der Dichtring an der Rotorscheibe angelegt, wobei die Ausnehmungen und Vorsprünge einander gegenüberliegen. Anschließend können diese durch eine geringfügige Verdrehung beider Teile gegeneinander miteinander verhakt werden.

Ein axialer Rotorabschnitt mit Merkmalen des Oberbegriffs von Anspruch 1 ist aus der US-A-5 713 721 bekannt.

Die Aufgabe der Erfindung ist daher die Bereitstellung eines axialen Rotorabschnittes für eine stationäre Turbine und die Bereitstellung eines Dichtelementes für einen mit Laufschaufeln bestückten Rotor einer Turbine, welche im Hinblick auf den Ein- und Ausbau von Dichtelementen und von Laufschaufeln verbessert ist.

Diese Aufgabe ist durch einen axialen Rotorabschnitt mit den Merkmalen gemäß Anspruch 1 gelöst.

Der axiale Rotorabschnitt gemäß dem Oberbegriff des Anspruchs 1 zeichnet sich insbesondere dadurch aus, dass das Mittel ein Sicherungsblech mit mindestens einem Loch umfasst, welches Loch mit einem der Löcher der Seitenwände der Dichtungsnut fluchtet, so dass der in den jeweils fluchtenden Löchern eingesetzte Bolzen das Sicherungsblech gegen Lösen sichert.

Es ist somit vorgesehen, dass der in den Löchern eingesetzte Bolzen das Sicherungsblech und umgekehrt das Sicherungsblech den Bolzen gegen Lösen sichert. Es ist dadurch möglich, eine einfache sowie schnell und leicht zu montierende bzw. zu demontierende Sicherung der Dichtelemente gegen eine Verschiebung in Umfangsrichtung herzustellen. Durch die Verwendung eines in einem Loch sitzenden Bolzens, welcher ebenso mit jedem ihm zugeordneten Dichtelement gleichfalls in Formschluss steht, kann ein wieder verwendbares Bauteil zur Sicherung der Dichtelemente angegeben werden. Lediglich die Sicherungsbleche sind als Ersatzteil zur einmaligen Verwendung ausgebildet, wodurch sich eine kostengünstige Demontage und Montage von Laufschaufeln und Dichtelementen erreichen lässt. Außerdem sind die Sicherungsbleche und Bolzen kostengünstig herzustellen.

In den Unteransprüchen sind vorteilhafte Ausgestaltungen angegeben.

Gemäß einer ersten vorteilhaften Weiterbildung ist in der weiteren Umfangsfläche eine zur Dichtungsnut benachbarte Sicherungsnut vorgesehen, in welcher die Sicherungsbleche eingesetzt sind. Zwar können die Sicherungsbleche auch in der Dichtungsnut angeordnet sein, aber gemäß vorgenannter Ausgestaltung lassen sich sowohl die Dichtelemente als auch die Sicherungsbleche wesentlich einfacher und mit weniger Aufwand platzieren, wenn für jedes der beiden Elemente jeweils eine dafür vorgesehene Nut am axialen Rotorabschnitt vorhanden ist. Im vorgenannten Fall erstreckt sich das Loch, in dem der Bolzen eingesetzt ist, auch durch die Seitenwände der Sicherungsnut.

Der Sitz des Sicherungsbleches in einer eigenen Sicherungsnut ist insbesondere dann von Vorteil, wenn das Sicherungsblech bei der Montage plastisch verformt, also umgebogen werden muss. Die Seitenwände der Sicherungsnut sind in besonderem Maße geeignet, die dabei wirkenden Kräfte aufzunehmen.

Vorzugsweise ist das Sicherungsblech plattenförmig und mit einer in einer Betriebslage radialen Erstreckung versehen, welche größer ist als die Tiefe der Sicherungsnut. Insbesondere weist das Sicherungsblech eine derartige radiale Länge auf, dass es nach dem Einsetzen in der Sicherungsnut um die weitere Umfangsfläche umgebogen werden kann, bis es im umgebogenen Zustand das in der zweiten Seitenfläche angeordnete Loch, durch den der Bolzen eingesetzt worden ist, zumindest teilweise überdeckt. Beispielsweise kann das Sicherungsblech von zwei Blechschenkeln gebildet sein. Einer der beiden Blechschenkel weist ein Loch zur Aufnahme des Bolzens aus und der andere Blechschenkel ist als Zunge ausgebildet, welcher das in der zweiten Seitenfläche angeordnete Loch geringfügig überdecken kann. Hierdurch blockiert die Zunge die Öffnung des Lochs, so dass der Bolzen blockiert ist. Dieser kann dann selbst bei beim Betrieb der Turbine auftretenden Vibrationen nicht aus dem Loch heraus gleiten. Zur Demontage des Bolzens, des Dichtelementes bzw. der Laufschaufel ist lediglich die am Sicherungsblech vorgesehene Zunge mit einem Flacheisen derart zurück zu biegen, dass die Öffnung des Lochs, in dem der Bolzen sitzt, wieder freigegeben wird. Anschließend ist der Bolzen durch die Öffnung entnehmbar.

In einer anderen vorteilhaften Ausgestaltung ragt ein Ende des Bolzens teilweise aus dem Loch der zweiten Seitenfläche heraus, so dass dieses Ende mit dem Sicherungsblech formschlüssig verbunden werden kann. Beispielsweise ist die aus dem Rotorabschnitt herausragende Stirnseite des Bolzens mit mindestens einem Vorsprung versehen, der von dem das Loch überdeckenden Blechschenkel des Sicherungsbleches hintergreifbar ist. Dadurch wird gewährleistet, dass der Blechschenkel des Sicherungsbleches fest mit dem Ende des Bolzens verbunden wird, was ein Aufbiegen des Sicherungsbleches unter Fliehkraft weiter verhindert. In dieser Ausgestaltung ist der Bolzen besonders zuverlässig gegen ungewolltes Lösen gesichert.

Der Formschluss kann dabei derartig ausgebildet sein, dass der mit dem herausragenden Ende des Bolzens verbundene Blechschenkel des Sicherungsbleches unter Fliehkrafteinwirkung an die zweite Seitenfläche gedrückt wird. Dann ist zum Öffnen des Formschluss eine Mindestreibkraft zwischen dem Bolzen und dem Sicherungsblech zu überwinden, was das ungewollte Aufbiegen des Sicherungsbleches beim Betrieb der Gasturbine stets zuverlässig verhindert.

In einer weiteren Ausgestaltung des Sicherungsbleches ist dieses U-förmig mit zwei frei endenden Blechschenkeln ausgebildet, wobei in jedem der Blechschenkel jeweils ein Loch für den Bolzen vorgesehen ist. Die beiden Löcher liegen dabei einander nicht exakt gegenüber. Die U-Form des Sicherungsbleches ist dabei derartig ausgebildet, dass dieses eingesetzt in der Dichtungsnut oder Sicherungsnut federelastisch betätigt werden kann, damit die Löcher des Sicherungsbleches als auch das in der zweiten Seitenfläche vorgesehene Loch fluchtend in Übereinstimmung gebracht werden können, damit der Bolzen einsetzbar ist. Der Bolzen ist dabei an seinem aus der Seitenfläche herausragenden Ende mit einer Ringnut versehen, in welche eines der Löcher des Sicherungsbleches einschnappen kann. Auch mit dieser Ausgestaltung ist eine selbstsichernde Befestigung des Bolzens erreichbar.

Gemäß einer weiteren Ausbildung des Sicherungsbleches weist das Loch eine Öffnung nach Art eines Schlüssellochs mit einem kleineren und einem größeren Durchmesser auf, wobei der Bolzen einen Außendurchmesser größer als der kleinere Durchmesser des Schlüssellochs aufweist und mit einer endlos umlaufenden Ringnut versehen ist, in der das Sicherungsblech mit seinem Schlüsselloch eingreift. Zur Montage dieser Sicherung wird zuerst das Sicherungsblech in die Sicherungsnut eingesetzt und anschließend der Bolzen in das dafür vorgesehene Loch. Sonach wird das Sicherungsblech nach außen angehoben, so dass der kleinere Durchmesser des Schlüssellochs in die endlos umlaufende Ringnut des Bolzens eingreift. Danach wird das Sicherungsblech in der angehobenen Stellung umgebogen, um es so in dieser Stellung zu fixieren. Das Sicherungsblech liegt dann mit seinem äußeren Ende an der weiteren Umfangsfläche des Rotorabschnittes an.

Zweckmäßigerweise wird der Rotorabschnitt von einer Rotorscheibe gebildet, welche eines der Teile des Rotors einer Turbine sein kann.

Die Erfindung wird anhand einer Zeichnung erläutert. Dabei zeigen:
- FIG 1: den Querschnitt durch den äußeren Umfang einer Rotorscheibe für die Turbine einer Gasturbine,
- FIG 2: in perspektivischer Darstellung ein plattenförmiges Dichtelement,
- FIG 3: den Querschnitt durch den Rotor der Gasturbine mit eingesetzter Turbinenlaufschaufel sowie stirnseitig angeordneten Dichtelementen,
- FIG 4: ein Sicherungsblech gemäß einer ersten Ausgestaltung in perspektivischer Darstellung,
- FIG 5: das Sicherungsblech gemäß FIG 4 im Querschnitt,
- FIG 6: einen auf das Sicherungsblech gemäß FIG 4 abgestimmten Bolzen,
- FIG 7: das in einer Dichtungsnut angeordnete Dichtelement, gesichert durch den Bolzen und das Sicherungsblech gemäß der ersten Ausgestaltung,
- FIG 8: ein Sicherungsblech in einer perspektivischen Darstellung gemäß einer zweiten Ausgestaltung,
- FIG 9: den zu dem Sicherungsblech gemäß FIG 8 zugehörigen Bolzen in perspektivischer Darstellung,
- FIG 10, 11: in Querschnittsdarstellungen die Montageschritte zur Herstellung der Sicherung des Bolzens gegen Verlust gemäß der zweiten Ausgestaltung,
- FIG 12: eine dritte Ausgestaltung eines Sicherungsbleches in perspektivischer Darstellung,
- FIG 13: den in Verbindung mit dem Sicherungsblech gemäß FIG 12 einzusetzenden Bolzen in perspektivischer Darstellung,
- FIG 14: das Sicherungsblech gemäß FIG 12 und den in der Rotorscheibe eingesetzten Bolzen gemäß FIG 13 in montierter Darstellung,
- FIG 15: eine vierte Ausgestaltung eines Sicherungsbleches in perspektivischer Darstellung,
- FIG 16: das nach FIG 15 ausgebildete Sicherungsblech im eingebauten Zustand.

Gasturbinen und deren Wirkungsweisen sind allgemein bekannt. Die Rotoren der Gasturbinen können beispielsweise aus mehreren aneinander liegenden Rotorscheiben gebildet sein, die mit einem zentralen oder auch mit mehreren dezentralen Zugankern verspannt sind. Jeder Rotor umfasst somit mehrere Rotorabschnitte, die jeweils von einer Rotorscheibe gebildet sein können.

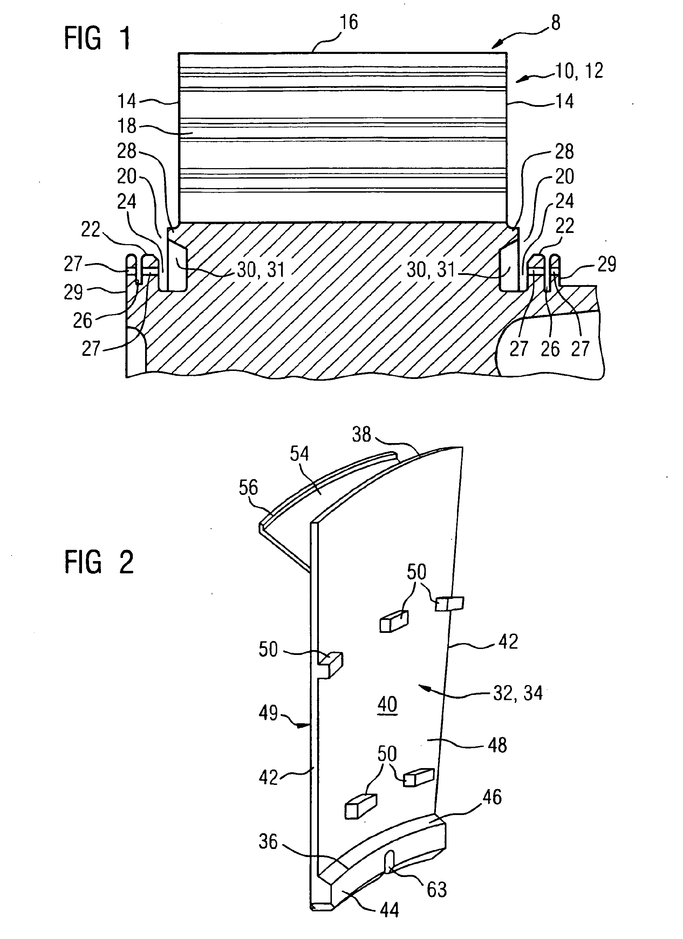

FIG 1 zeigt den Querschnitt durch den äußeren Bereich 8 einer erfindungsgemäßen Rotorscheibe 10, welche einen axialen Abschnitt 12 des Turbinenrotors darstellt. Die Rotorscheibe 10 weist eine nicht dargestellte Nabenbohrung zur Aufnahme des zentralen Zugankers auf. Der äußere Bereich 8 der Rotorscheibe 10 wird von zwei gegenüberliegenden stirnseitigen ersten Seitenflächen 14 gebildet, die durch eine Umfangsfläche 16 miteinander verbunden sind. Entlang des Umfangs sind mehrere Laufschaufelhaltenuten 18 gleichmäßig verteilt. Der Schnitt durch die Rotorscheibe 10 ist dabei so gelegt, dass dieser durch eine der in der Umfangsfläche 16 vorgesehenen Laufschaufelhaltenuten 18 verläuft. Jede im Querschnitt tannenbaumförmige Laufschaufelhaltenut 18 erstreckt sich in Axialrichtung des Rotors und ist dabei sowohl radial außen als auch axial stirnseitig offen. Die Laufschaufelhaltenut 18 ist zur Aufnahme einer Laufschaufel der Turbine vorgesehen.

Im dargestellten Beispiel sind zu den beiden ersten Seitenflächen 14 radial weiter innen benachbarte weitere Umfangsflächen 22 vorgesehen. Die Umfangsfläche 22 kann beispielsweise, wie links an der Rotorscheibe 10 dargestellt, durch eine Stufe geformt sein. In der Umfangsfläche 22 ist eine radial nach außen offene, in Umfangsrichtung erstreckende Dichtungsnut 24 vorgesehen. In oder über der Öffnung 20 jeder Dichtungsnut 24 ist ein endlos umlaufender stirnseitiger Vorsprung 28 vorgesehen, der die Öffnung 20 der Dichtungsnut 24 in Axialrichtung jeweils zumindest teilweise unter Bildung einer Hinterschneidung 30 überdeckt. Der Vorsprung 28 weist eine zur Dichtungsnut 24 weisende Anlagefläche 31 auf.

Zur Dichtungsnut 24 benachbart ist in jeder weiteren Umfangsfläche 22 eine ebenfalls endlos umlaufende Sicherungsnut 26 vorgesehen. In dieser Sicherungsnut 26 können - später gezeigte - Sicherungsbleche montiert werden, mittels denen Bolzen und Dichtelemente gesichert werden. Für die Bolzen sind sich in Axialrichtung des Rotors erstreckende Löcher 27 vorgesehen, die die Seitenwände der Sicherungsnut 26 und eine der Seitenwand der Dichtungsnut 24 jeweils durchdringen. Die gebohrten Löcher 27 erstrecken sich dabei jeweils auch durch zweite Seitenflächen 29 der Rotorscheibe 10.

Sowohl die Dichtungsnut 24 als auch die Sicherungsnut 26 können anstelle von einer Stufe auch von nach außen hervorstehenden Vorsprüngen gebildet werden, die an einem Balkon vorgesehen sind. Dies ist in FIG 1 auf der rechten Seite der Rotorscheibe 10 dargestellt.

Jede Dichtungsnut 24 ist zur Aufnahme von Dichtelementen 32 vorgesehen, welche in FIG 2 in perspektivischer Darstellung gezeigt sind. Das Dichtelement 32 umfasst einen plattenförmigen, im wesentlichen viereckigen Grundkörper 34, der zwischen einer in einer Betriebslage radial innen vorgesehenen Innenkante 36 und einer in einer Betriebslage radial außen vorgesehenen Außenkante 38 einen Mittenbereich 40 aufweist. Der Mittenbereich 40 wird von zwei Seitenwänden 48, 49 gebildet, die im Wesentlichen einen gleich bleibenden Abstand zueinander aufweisen, d.h. die Wandstärke des Mittenbereiches 40 ist im Wesentlichen konstant. Die Innenkante 36 und die Außenkante 38 sind über zwei geradlinige Seitenkanten 42 miteinander verbunden. Die Innenkante 36 weist gegenüber dem Mittenbereich 40 eine wulstartige Aufweitung 44 unter Bildung einer nach außen gerichteten Anlagefläche 46 auf. Die Aufweitung 44 und die Anlagefläche 46 erstrecken sich über die gesamte in Umfangsrichtung verlaufende Länge der Innenkante 36 und verlaufen somit unterbrechungslos zwischen den beiden Seitenkanten 42.

Die Aufweitung 44 ist dabei lediglich an derjenigen Seitenwand 48 des Dichtelementes 32 vorgesehen, welche in einer Betriebslage der ersten Seitenfläche 14 des Rotorabschnitts 12 gegenüberliegt. Auf der der ersten Seitenfläche 14 abgewandten Seitenwand 49 des Dichtelementes 32 geht der Mittenbereich 40 versatzfrei in die Innenkante 36 über.

Des Weiteren sind am Dichtelement 32 mehrere, sowohl in Umfangsrichtung als auch in Radialrichtung zueinander beabstandeten Abstandshalter 50 vorgesehen. Diese sind dabei auf derjenigen Seitenwand 48 des Dichtelementes 32 angeordnet, welcher der ersten Seitenfläche 14 des Rotorabschnittes 12 zugewandt ist.

Auf der zur ersten Seitenfläche 14 des Rotorabschnitts 12 abgewandten Seitenwand 49 des Dichtelementes 32 ist im Bereich der Außenkante 38 ein sich quer zur Radialrichtung erstreckender Überhang 54 vorgesehen. Der Überhang 54 weist dabei eine in Umfangsrichtung verlaufende, nach außen gerichtete Dichtspitze 56 auf.

Des Weiteren weist das Dichtelement 32 im Bereich der Innenkante 36 eine Ausnehmung 63 zur Aufnahme eines Sicherungselementes auf. Die Ausnehmung 63 ist dabei derartig angeordnet, dass diese die äußere Anlagefläche 46 der Aufweitung 44 nicht unterbricht. Vorzugsweise ist die Ausnehmung 63 als Sackloch ausgebildet und nur auf derjenigen Seitenwand 49 angeordnet, welcher der ersten Seitenfläche 14 der Rotorscheibe 10 abgewandt ist.

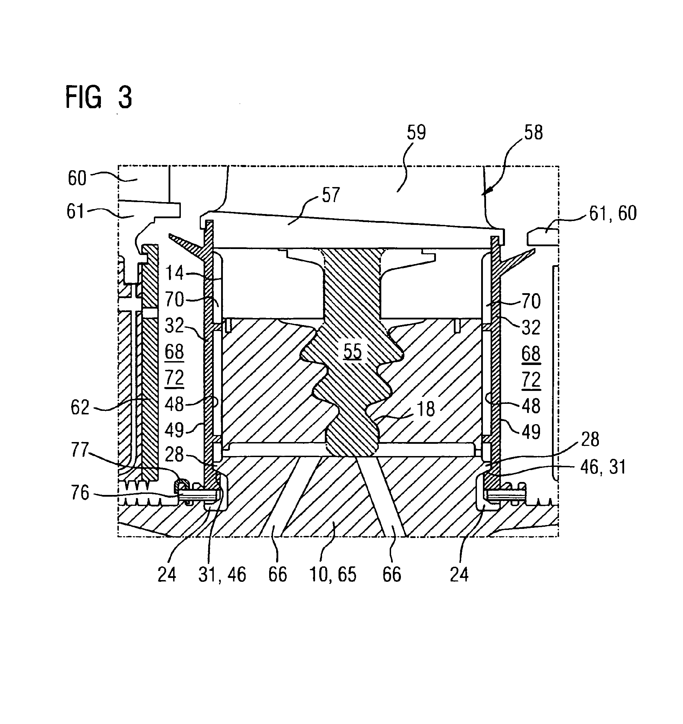

FIG 3 zeigt wie FIG 1 den Querschnitt durch den äußeren Bereich einer Rotorscheibe 10, wobei auch eine in einer Laufschaufelhaltenut 18 angeordnete Laufschaufel 58 dargestellt ist. Die Laufschaufel 58 weist einen rotorseitigen Fuß 55 auf, an dem sich eine Plattform 57 und daran anschließend ein aerodynamisch profiliertes Schaufelblatt 59 einstückig anschließt.

Der Fuß 55 der Laufschaufel 58 ist im Querschnitt tannenbaumförmig und korrespondiert zu der Tannenbaumform der Laufschaufelhaltenut 18. Die Schemadarstellung der Kontur des Laufschaufelfußes 55 und die der Laufschaufelhaltenut 18 ist gegenüber der restlichen Darstellung der FIG 3 um 90° gedreht wiedergegeben. Somit erstreckt sich auch die in der Figur 3 dargestellte Laufschaufelhaltenut 18, wie in FIG 1 korrekter Weise dargestellt, zwischen den beiden ersten Seitenflächen 14 des axialen Rotorabschnittes 12.

Des Weiteren sind kopfseitige Enden 61 von Leitschaufeln 60 schematisch angedeutet, die, in Strömungsrichtung des Arbeitsmediums der Gasturbine betrachtet, stromauf und stromab der Laufschaufel 58 angeordnet sind. Die Leitschaufeln 60 sind dabei strahlenförmig in Kränzen angeordnet. Die Leitschaufeln 60 eines jeden Kranzes sind durch einen kopfseitig vorgesehenen Befestigungsring 62 stabilisiert. Der Befestigungsring 62 umgreift den Rotor 65 der Gasturbine vollständig und wird von den drehfesten Leitschaufeln 60 getragen. Der Befestigungsring 62 ist dabei in einem Freiraum 68 angeordnet, der zwischen den ersten Seitenflächen 14 benachbarter Rotorscheiben 10 liegt.

Durch beidseitig der Rotorscheibe 10 in den Dichtungsnuten 24 eingesetzte Dichtelemente 32 ist die Laufschaufel 58 gegen axiales Verschieben innerhalb der Laufschaufelhaltenut 18 gesichert.

Der Freiraum 68 wird durch das Dichtelement 32 in zwei Räume 70, 72 unterteilt. Der erste Raum 70 ist axial von der Seitenwand 48 des Dichtelements 32 und von der dieser Seitenwand 48 gegenüberliegenden ersten Seitenfläche 14 des Rotorabschnittes 12 begrenzt. Der zweite Raum 72 entspricht dem restlichen Freiraum 68 und wird teilweise von der Seitenwand 49 des Dichtelementes 32 begrenzt.

Des Weiteren sind in der Rotorscheibe 10 Kühlkanäle 66 zur Führung von Kühlmittel vorgesehen.

Nachfolgend werden vier unterschiedliche Ausgestaltungen der Erfindung beschrieben, wobei gleiche Bauteile der unterschiedlichen Ausgestaltungen mit identischen Bezugsnummern versehen sind. Gemäß der Nummerierung der Ausgestaltung Eins bis Vier sind die jeweiligen Bezugsnummern zur Identifizierung der Ausgestaltung noch mit einem korrespondierenden Suffix a bis d versehen.

Zu jeder Ausgestaltung wird ein Paar von einem Sicherungsblech 77 und einem dazu verwendenden Bolzen 76 beschrieben.

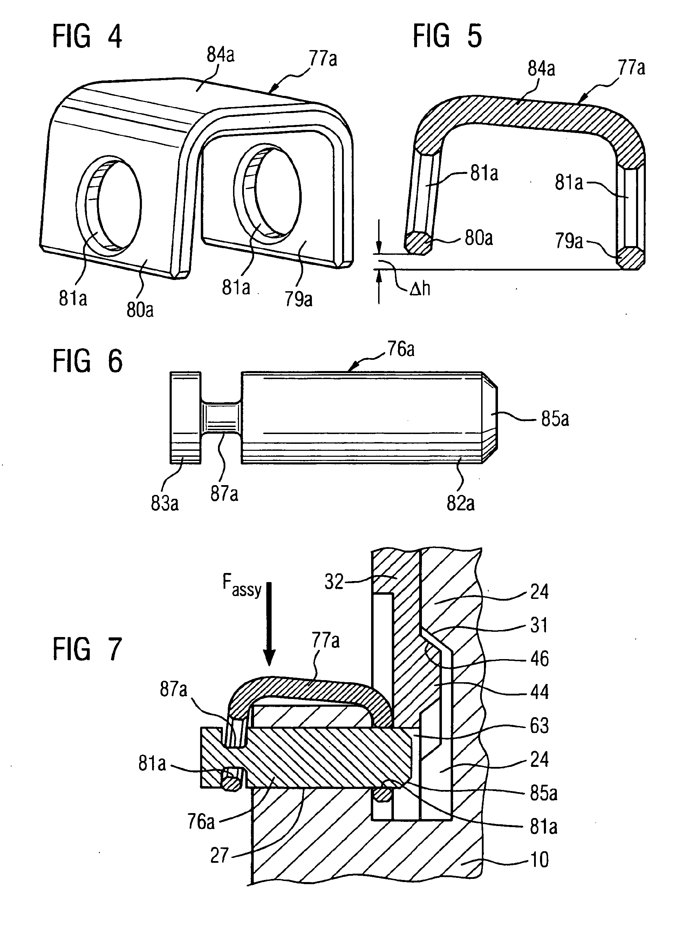

FIG 4 zeigt ein federelastisches Sicherungsblech 77a gemäß einer ersten Ausgestaltung. Das Sicherungsblech 77a ist U-förmig mit zwei frei endenden Blechschenkeln 79a, 80a ausgebildet, wobei in jedem der Blechschenkel 79a, 80a jeweils ein Loch 81a für den Bolzen 76a vorgesehen ist. Die beiden Blechschenkel 79a, 80a sind über einen Steg 84a miteinander verbunden und stehen geringfügig schräg zueinander, so dass die beiden darin vorgesehenen Löcher 81a nicht zueinander fluchten.

Gemäß FIG 5 weisen die beiden Blechschenkel 79a, 80a unterschiedliche Abmaße auf, die sich in dem Maß Δh unterscheiden. Dieses Maß entspricht auch der Verschiebung der beiden Löcher 81a des entspannten Sicherungsbleches 77a.

Der in FIG 6 dargestellte Bolzen 76a kann in Verbindung mit dem Dichtblech 77a gemäß FIG 4 zur Sicherung des Dichtelementes 32 gemeinschaftlich in der Rotorscheibe 10 verbaut werden. Der Bolzen 76a weist eine axiale Erstreckung zwischen zwei Bolzenenden 82a, 83a auf, wobei das erstes Ende 82a mit einer Fase 85a zur verbesserten Montierbarkeit versehen ist. Das zweite Ende 83a ist mit einer ringförmig umlaufenden Ringnut 87a versehen.

In FIG 7 ist ein Querschnitt durch einen Ausschnitt des axialen Rotorabschnittes 12 gezeigt, in dem das Sicherungsblech 77a gemäß FIG 4 mit einem Bolzen 76a gemäß FIG 6 eingebaut ist. In der Rotorscheibe 10 ist eine Stufe vorgesehen, in welcher das sich in Axialrichtung erstreckende Loch 27 vorgesehen ist, welches in einer Seitenwand der Dichtungsnut 24 endet. Zur Montage ist neben dem Dichtelement 32 zusätzlich das Sicherungsblech 77a mit seinem Blechschenkel 79a in die Dichtungsnut 24 einzusetzen. Dabei ist darauf zu achten, dass das Loch 27, die Löcher 81a und die im Dichtelement vorgesehene Ausnehmung 63 auf einer gedachten axialen Linie liegen. Aufgrund der beiden zueinander versetzten Löcher 81a des Sicherungsbleches 77a liegen die Löcher 81a, 27 - bezogen auf die Rotordrehachse - auf unterschiedlichen Radien. Anschließend ist das in der Dichtungsnut 24 eingesetzte Dichtelement 32 nach außen zu bewegen, das heißt anzuheben. Danach wird der Bolzen 76a durch das Loch 81a des anderen Blechschenkels 80a geführt und anschließend in das Loch 27 eingesetzt. Um das Einführen des Bolzen 76a zu erleichtern, kann eine nach innen gerichtete Hilfskraft F_{assy} auf den Verbindungssteg 84a des U-förmigen Sicherungsbleches 77a einwirken, damit dieses federelastisch verbogen wird. Durch das Verbiegen des federelastischen Sicherungsbleches 77a gelangen sämtliche Löcher 81a, 27 auf den gleichen Radius des Rotors, so dass der Bolzen 76a problemlos weiter eingeschoben werden kann. Nachdem der Bolzen 76a seine Betriebsposition gemäß FIG 7 erreicht hat und die Hilfskraft F_{assy} entfernt wurde, kann der Blechschenkel 79a des Sicherungsbleches 77 in die am Bolzen 76a vorgesehene Ringnut 87 zurückfedern, so dass der Bolzen 76a gegen eine radiale Verschiebung aufgrund des Formschlusses von der Ringnut 87a und dem Blechschenkel 79a gesichert ist. Das Sicherungsblech 77a wird selber vom Bolzen 76a gehalten.

Selbst beim Betrieb auftretende Fliehkräfte verhindern, dass sich der Bolzen 76a aus seinem Formschluss lösen kann. Im Gegenteil, die auf das Dichtblech 77a einwirkende Fliehkraft verhindert das Lösen des Formschlusses zwischen Bolzen 76a und Sicherungsblech 77a.

Zur Demontage des ersten Dichtelementes 77a gemäß FIG 4 ist dieses lediglich durch eine radial nach innen gerichtete Kraft F_{assy} elastisch zu verformen, bis der Formschluss zwischen Sicherungsblech 77a und Bolzen 76a im Bereich der Ringnut 87a gelöst ist. Anschließend kann der Bolzen 76a dem Loch 27 entnommen werden, danach das Sicherungsblech 77a sowie das Dichtelement 32. Selbstverständlich ist es auch möglich, das Sicherungsblech 77a in der Sicherungsnut 26 zu montieren.

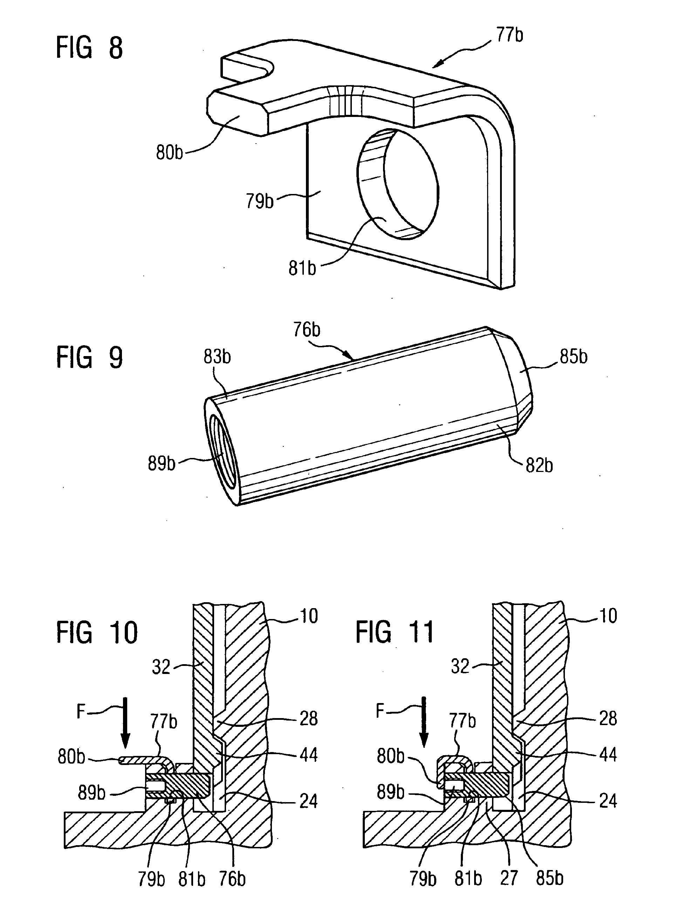

Eine zweite Ausgestaltung des Sicherungsbleches 77b ist in FIG 8 dargestellt. Das vor der Montage im Wesentlichen aus zwei rechtwinklig zueinander angeordneten Blechschenkeln 79b, 80b gebildete Dichtelement weist lediglich ein Loch 81b in einem der beiden Blechschenkel 79b auf. Der andere der beiden Blechschenkel 80a ist verjüngt und somit zungenförmig. Der zu diesem Sicherungselement 77b zu verwendende Bolzen 76b ist in FIG 9 in perspektivischer Darstellung gezeigt. An seinem ersten Ende 82b ist auch dieser mit einer Fase 85b versehen. Der Bolzen 76b ist in seinem gegenüberliegenden Ende 83b lediglich zylindrisch ausgebildet und weist stirnseitig ein Sackloch 89b mit einem Gewinde für einen Abzieher auf.

Die Montage des Sicherungsbleches 77b und des Bolzens 76b ist in den Figuren 10 und 11 dargestellt. Im Gegensatz zu der ersten Ausgestaltung gemäß FIG 7 ist die zur Bildung der Dichtungsnut 24 vorgesehene Stufe in Umfangsrichtung laufend geschlitzt, so dass hierdurch die Sicherungsnut 26 gebildet ist. Die Sicherungsnut 26 ist zur Aufnahme des Sicherungsbleches 77b gemäß FIG 8 vorgesehen. Zur Montage wird derjenige Blechschenkel 79b des Sicherungsbleches 77b in die Sicherungsnut 26 eingesetzt, in dem das Loch 81b vorgesehen ist. Dabei ist darauf zu achten, dass das Loch 81b mit dem Loch 27 fluchtet. Anschließend wird das in der Dichtungsnut 24 eingesetzte Dichtelement 32 angehoben, so dass dessen Ausnehmung 63 dem Loch 27 gegenüberliegt. Sonach wird der Bolzen 76b in das Loch 27 und durch das Loch 81b geschoben, bis der Bolzen 76b mit seinem ersten Ende 82b in die Ausnehmung 69 des Dichtbleches 32 eingreift. Vorzugsweise wird der Bolzen 76b so weit eingeschoben, bis sein zweites Ende 83b vollständig im Loch 27 versenkt ist. Anschließend wird durch Aufbringen einer radial nach innen gerichteten Montagekraft F der zweite Blechschenkel 80b radial nach innen verbogen, bis der vormals freie Schenkel 80 die stirnseitige Öffnung des Lochs 27 überdeckt und den Bolzen 76b gegen eine Verschiebung entlang des Lochs 27 blockiert (FIG 11). Damit während des plastischen Verformens des zungenartigen Blechschenkels 80b der mit dem Loch 81b versehene Blechschenkel 79b sicher gehalten ist, ist im Unterschied zu der Lösung gemäß FIG 7 das Sicherungsblech 77b nicht mit in der Dichtungsnut 24 eingesetzt, sondern in der Sicherungsnut 26. Die Seitenwände der Sicherungsnut 26 dienen als Widerlager für den Biegevorgang. Zur Demontage des Sicherungsbleches 77b des Bolzens 76b und des Dichtelementes 32 ist der das Loch 27 blockierende Blechschenkel 79b lediglich mit einem Flacheisen aufzubiegen. Anschließend kann der Bolzen 76b dem Loch 27 entnommen werden, wodurch das Dichtelement 32 zugänglich wird.

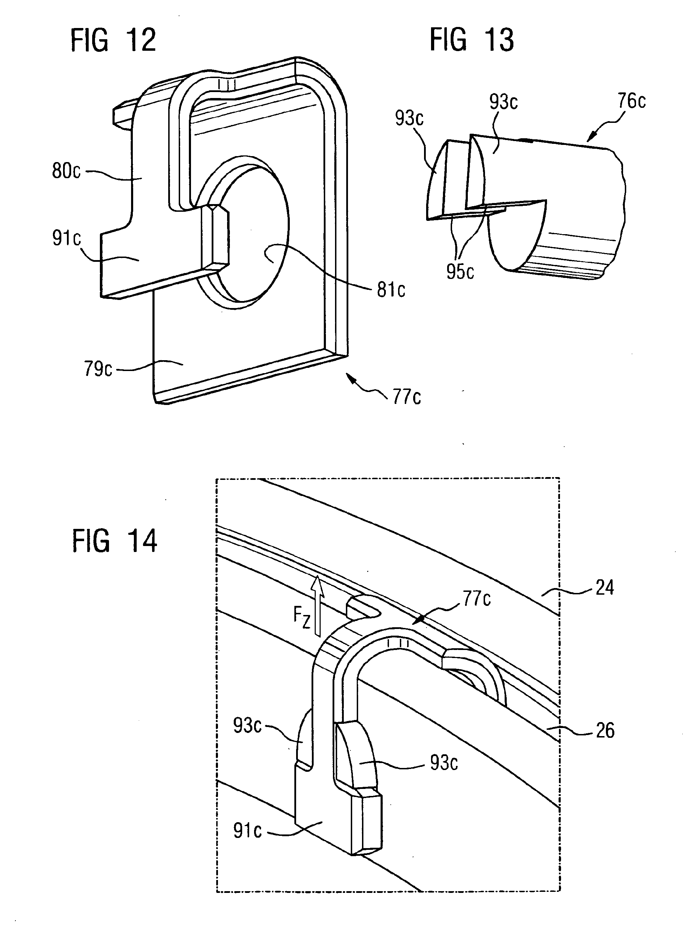

Eine dritte Ausgestaltung von einem Sicherungsblech 77c und dem Bolzen 76c ist in den Figuren 12 und 13 perspektivisch und in Figur 14 in verbautem Zustand dargestellt, wobei die Bezugszeichen bekannter Elemente nun mit dem Suffix c versehen sind.

Das Sicherungsblech 77c gemäß FIG 12 und dessen Montage ist im Wesentlichen zudem von FIG 8 identisch. In der Darstellung gemäß FIG 12 ist es schon in seinem umgebogenen Zustand gezeigt. Es unterscheidet sich jedoch im seinem freien Blechschenkel 80c, welcher zur Montage bzw. zur Sicherung des Bolzens 76 umzubiegen ist. Dieser Blechschenkel 80c erstreckt sich ausgehend vom ersten Blechschenkel 79c zuerst zungenartig und endet daran mit einen verbreitertem Hammerkopf 91c. Ebenso ist der Bolzen 76c gegenüber dem Bolzen 76b geringfügig modifiziert. Anstelle des stirnseitigen Sackloches 89b sind zwei Vorsprünge 93c am Bolzen 76c vorgesehen, die zueinander beabstandet sind. Dabei ist vorgesehen, dass im verbauten Zustand der von den beiden Vorsprüngen 93c gebildete Spalt den zungenartigen Abschnitt des Sicherungsbleches 77c aufnimmt und der Hammerkopf 91c des Sicherungsbleches 77c die beiden Vorsprünge 93c hintergreift, so wie es in FIG 14 dargestellt ist.

Die Vorsprünge 93c weisen zudem geneigte Flächen 95c auf, die zur Anlage des Hammerkopfes 91c vorgesehen sind. Dabei sind die Flächen 95c derart geneigt, dass das unter Fliehkrafteinwirkung F_{z} nach außen strebende Sicherungsblech 77c sich derartig mit dem Bolzen 76c verhakt, dass der während der Montage umgebogene Blechschenkel 80c aufgrund der Neigung der Vorsprünge 93c zur Seitenfläche bzw. zur Rotorscheibe 10 verschoben wird. Vorzugsweise sind der Bolzen 76c und das zugehörige Sicherungsblech 77c dabei derart ausgebildet, dass zum Öffnen des Formschlusses von Hammerkopf 91c und Vorsprung 93c eine Mindestreibkraft zwischen dem Bolzen 76c und dem Sicherungsblech 77c überwunden werden muss. Hierdurch ist eine besonders sichere und zuverlässige Montage von Sicherungsblech 77c als auch Bolzen 76c möglich.

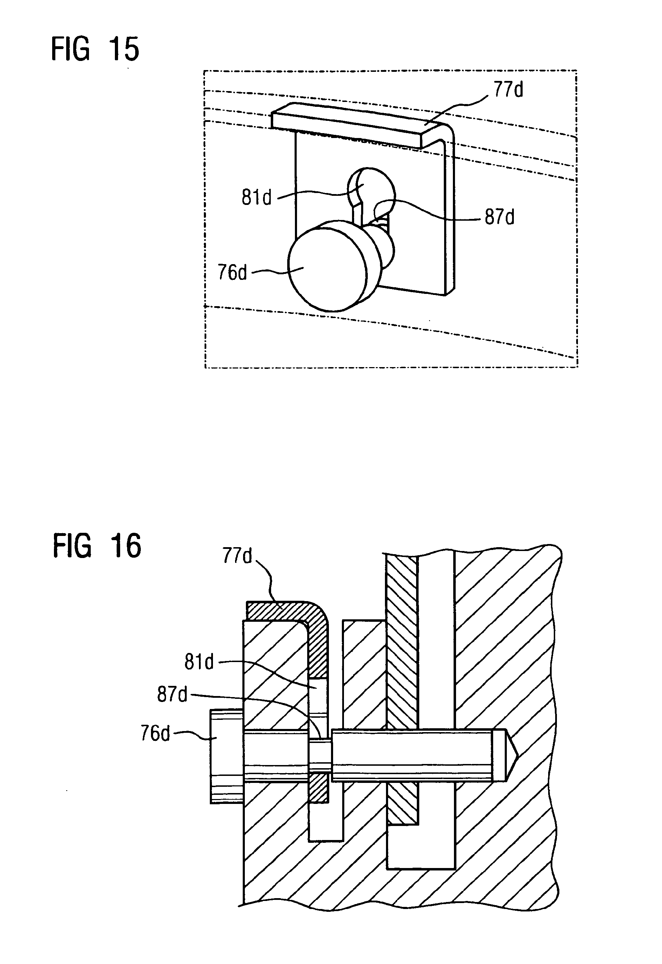

Eine vierte und letzte Ausgestaltung eines Sicherungsbleches 77 ist in den Figuren 15 und 16 dargestellt. Das Sicherungsblech 77d ist im wesentlichen plattenförmig ausgebildet und weist eine Öffnung nach Art eines Schlüsselloches mit einem kleineren und einem größeren Durchmesser auf. Der mit diesem Sicherungsblech 77d zu verwendende Bolzen 76d benötigt lediglich eine Ringnut 87d, welche bei montiertem Bolzen 76d derart positioniert ist, dass diese im Bereich der Sicherungsnut 26 ist. Zur Montage des Bolzens 76d und des Sicherungsbleches 77b muss zuerst das zuletzt Genannte in die Sicherungsnut 26 eingesetzt werden. Dabei ist darauf zu achten, dass die Löcher 81d des Sicherungsbleches 77d mit dem in der Rotorscheibe befindlichen Loch 27 fluchtet. Anschließend ist der Bolzen 76d in das Loch 27 einzusetzen und derart tief hinein zu bewegen, bis sich dieser mit seiner Ringnut 87d in der Sicherungsnut 26 befindet. Anschließend kann das Sicherungsblech 77d angehoben werden, so dass dieses mit seinem geringeren Durchmesser in die Ringnut 87d eingreift und den Bolzen gegen axiales Verschieben blockiert. Anschließend wird das noch ebene Sicherungsblech 77d umgebogen, so dass der aus der Sicherungsnut 26 hervorstehende Abschnitt am Umfang der Rotorscheibe 10 zum Anliegen kommt (FIG 16).

Insgesamt kann mit der Erfindung ein axialer Rotorabschnitt 12 für einen Rotor einer Turbine angegeben werden, bei dem ein an einer stirnseitigen Seitenfläche 14 vorgesehenes Dichtelement 32 gegen eine Verschiebung in Umfangsrichtung durch einen Bolzen 76 gesichert ist, wobei der Bolzen 76 mittels eines Sicherungsbleches 77 zuverlässig gegen Lösen gesichert ist. Besonderer Vorteil der Erfindung ist die vergleichsweise einfache sowie kostengünstige Konstruktion bestehend aus Sicherungsblech 77, Bolzen 76, Bohrungen und Nuten 24, 26. Zudem lassen sich diese Bauteile aufgrund ihrer simplen Geometrie schnell montieren und demontieren.

## Patentansprüche

1. Axialer Rotorabschnitt (12) für einen Rotor einer Turbine,
mit einer an zwei stirnseitigen ersten Seitenflächen (14) angrenzenden äußeren Umfangsfläche (16),
in der über den Umfang verteilte, sich in Axialrichtung erstreckende Laufschaufelhaltenuten (18) für Laufschaufeln der Turbine vorgesehen sind und
mit einer zu einer der beiden ersten Seitenflächen (14) radial weiter innen benachbarten weiteren Umfangsfläche (22),
in der zumindest eine radial nach außen offene in Umfangsrichtung erstreckende Dichtungsnut (24) mit mehreren darin eingesetzten, die stirnseitigen Öffnungen der Laufschaufelhaltenuten (18) zumindest teilweise überdeckenden Dichtelementen (32) vorgesehen ist,
wobei an der weiteren Umfangsfläche (22) eine zweite Seitenfläche (29) angrenzt und für jedes Dichtelement (32) ein Loch (27) in der zweiten Seitenfläche (29) vorgesehen ist, welches in Axialrichtung erstreckend mindestens eine der Seitenwände der Dichtungsnut (24) durchdringt,
wobei jedes Dichtelement (32) gegen eine Verschiebung in Umfangsrichtung durch einen im Loch (27) sitzenden Bolzen (76) gesichert ist, und
mit jeweils einem Mittel, mit dem jeder Bolzen (76) gegen eine Verschiebung entlang des Lochs gesichert ist,
**dadurch gekennzeichnet, dass**
das Mittel ein Sicherungsblech (77) mit mindestens einem Loch (81) umfasst, welches Loch (81) mit einem der Löcher (27) der Seitenwände der Dichtungsnut (24) fluchtet,
so dass der in den jeweils fluchtenden Löchern (27, 81) eingesetzte Bolzen (76) das Sicherungsblech (77) gegen Lösen sichert.

2. Rotorabschnitt (12) nach Anspruch 1,
bei dem in der weiteren Umfangsfläche (22) eine zur Dichtungsnut (24) benachbarte Sicherungsnut (26) vorgesehen ist, in welcher die Sicherungsbleche (77) eingesetzt sind.

3. Rotorabschnitt (12) nach Anspruch 1 oder 2,
mit einem Sicherungsblech (77), welches teilweise um einen Abschnitt der weiteren Umfangsfläche (22) umbiegbar ist.

4. Rotorabschnitt (12) nach Anspruch 1, 2 oder 3,
bei dem das Sicherungsblech (77) derart ausgebildet ist, dass es im umgebogenen Zustand das in der zweiten Seitenfläche (29) angeordnete Loch (27), in dem der Bolzen (76) sitzt, zumindest teilweise überdeckt.

5. Rotorabschnitt (12) nach Anspruch 1, 2 oder 3,
bei dem ein Ende (83) des Bolzens (76) teilweise aus dem Loch (27) der zweiten Seitenfläche (29) herausragt und mit dem Sicherungsblech (77) durch Formschluss verbunden ist.

6. Rotorabschnitt (12) nach Anspruch 5,
bei dem die herausragende Stirnseite des Bolzens (76) mit mindestens einem Vorsprung (93) versehen ist, der von dem zu dem Vorsprung (93) korrespondierend ausgeführten Ende des Sicherungsbleches (77) hintergreifbar ist.

7. Rotorabschnitt (12) nach einem der Ansprüche 5 oder 6,
bei dem zum Öffnen des Formschlusses eine Mindestreibkraft zwischen dem Bolzen (77) und dem Sicherungsblech (76) überwunden werden muss.

8. Rotorabschnitt (12) nach Anspruch 1 oder 2,
bei dem das Sicherungsblech (77) U-förmig mit zwei frei endenden Blechschenkeln (79) ausgebildet ist,
wobei in jedem Blechschenkel (79) jeweils ein Loch (81) für den Bolzen (76) vorgesehen ist.

9. Rotorabschnitt (12) nach Anspruch 1, 2 oder 8,
bei dem das Loch (81) des Sicherungsbleches (77) eine Öffnung nach Art eines Schlüssellochs mit einem kleineren und einem größeren Durchmesser aufweist und bei dem der Bolzen (76) einen Außendurchmesser größer als der größere Durchmesser des Schlüssellochs aufweist und mit einer endlos umlaufenden Ringnut (87) versehen ist, in der das Sicherungsblech (77) mit seinem Schlüsselloch eingreift.

10. Rotorabschnitt (12) nach einem der vorhergehenden Ansprüche,
ausgebildet als Rotorscheibe (10).

## Claims

1. Axial rotor section (12) for a rotor of a turbine,
having an outer circumferential surface (16) which is adjacent to two end first side surfaces (14),
in which rotor blade holding grooves (18) for rotor blades of the turbine, are distributed over the circumference and extend in the axial direction, and
having a further circumferential surface (22) which, radially further inwards, is adjacent to one of the two first side surfaces (14),
in which further circumferential surface (22) at least one sealing groove (24) is provided, is open radially outwards, extends in the circumferential direction and has a plurality of sealing elements (32) which are inserted therein and at least partially cover the end openings of the rotor blade holding grooves (18),
with a second side surface (29) being adjacent to the further circumferential surface (22) and with a hole (27) for each sealing element (32) being provided in the second side surface (29) and passing through at least one of the side walls of the sealing groove (24), extending in the axial direction, with each sealing element (32) being secured against movement in the circumferential direction by a bolt (76) which is seated in the hole (27), and
in each case having a means which is used to secure each bolt (76) against movement along the hole,
**characterized in that**
the means comprises a securing plate (77) having at least one hole (81) which is aligned with one of the holes (27) in the side walls of the sealing groove (24),
such that the bolt (76) which is inserted into the respectively aligned holes (27, 81) secures the securing plate (77) against becoming loose.

2. Rotor section (12) according to Claim 1,
in which a securing groove (26) is provided in the further circumferential surface (22) and is adjacent to the sealing groove (24), and in which the securing plates (77) are inserted.

3. Rotor section (12) according to Claim 1 or 2,
having a securing plate (77) which can be partially bent around a section of the further circumferential surface (22).

4. Rotor section (12) according to Claim 1, 2 or 3,
in which the securing plate (77) is designed such that, in the bent-around state, it at least partially covers the hole (27) which is arranged in the second side surface (29) and in which the bolt (76) is seated.

5. Rotor section (12) according to Claim 1, 2 or 3,
in which one end (83) of the bolt (76) projects partially out of the hole (27) in the second side surface (29) and is connected to the securing plate (77) by an interlock.

6. Rotor section (12) according to Claim 5,
in which the projecting end face of the bolt (76) is provided with at least one projection (93), behind which the end of the securing plate (77) which is designed to correspond to the projection (93) engages.

7. Rotor section (12) according to one of Claims 5 or 6,
in which a minimum friction force between the bolt (77) and the securing plate (76) must be overcome in order to open the interlock.

8. Rotor section (12) according to Claim 1 or 2,
in which the securing plate (77) is U-shaped with two freely ending plate limbs (79), with a hole (81) for the respective bolt (76) being provided in each plate limb (79).

9. Rotor section (12) according to Claim 1, 2 or 8,
in which the hole (81) in the securing plate (77) has an opening in the form of a keyhole with a smaller and a larger diameter, and in which the bolt (76) has an external diameter which is larger than the larger diameter of the keyhole and is provided with an endlessly circumferential annular groove (87) in which the keyhole in the securing plate (77) engages.

10. Rotor section (12) according to one of the preceding claims,
in the form of a rotor disk (10).

## Revendications

1. Partie ( 12 ) axiale d'un rotor de turbine,
comprenant une surface ( 16 ) périphérique extérieure voisine de deux premières surfaces ( 14 ) latérales du côté frontal,
surface périphérique dans laquelle il est prévu des rainures ( 18 ) de maintien d'aubes mobiles de la turbine, s'étendant dans la direction axiale en étant réparties sur la périphérie, et
comprenant une autre surface ( 22 ) périphérique voisine radialement plus loin vers l'intérieur de l'une des deux premières surfaces ( 14 ) latérales,
autre surface périphérique dans laquelle il est prévu au moins une rainure ( 24 ) d'étanchéité, s'étendant radialement vers l'extérieur et ouverte dans la direction périphérique, ayant plusieurs éléments ( 32 ) d'étanchéité recouvrant au moins en partie les ouvertures du côté frontal des rainures ( 18 ) de maintien des aubes mobiles,
dans laquelle une deuxième surface ( 29 ) latérale est voisine de l'autre surface ( 22 ) périphérique et il est prévu, pour chaque élément ( 32 ) d'étanchéité, un trou ( 27 ) dans la deuxième surface ( 29 ) latérale, qui traverse, en s'étendant dans la direction axiale, au moins l'une des parois latérales de la rainure ( 24 ) d'étanchéité,
dans laquelle chaque élément d'étanchéité est empêché de se déplacer dans la direction périphérique par un axe ( 76 ) mis dans le trou ( 27 ), et
comprenant respectivement un moyen par lequel chaque axe ( 67 ) est empêché de se déplacer le long du trou,
**caractérisée en ce que**
le moyen comprend une tôle ( 77 ) de sécurité ayant au moins un trou ( 81 ) lequel est aligné avec l'un des trous ( 27 ) des parois latérales de la rainure ( 24 ) d'étanchéité de sorte que l'axe ( 76 ) inséré respectivement dans les trous ( 27, 81 ) alignés empêche la tôle ( 77 ) de sécurité de se détacher.

2. Partie ( 12 ) de rotor suivant la revendication 1,
dans laquelle dans l'autre surface ( 22 ) périphérique est prévue une rainure ( 26 ) de sécurité, qui est voisine de la rainure ( 24 ) d'étanchéité et dans laquelle sont insérées les tôles ( 77 ) de sécurité.

3. Partie ( 12 ) de rotor selon la revendication 1 ou 2, comprenant une tôle ( 77 ) de sécurité, qui peut être courbée partiellement autour d'une partie de l'autre surface ( 22 ) périphérique.

4. Partie ( 12 ) de rotor selon la revendication 1, 2 ou 3, dans laquelle la tôle ( 77 ) de sécurité est telle qu'elle recouvre au moins en partie, à l'état non recourbé, le trou qui est disposé dans le deuxième surface ( 29 ) latérale et dans lequel est mis l'axe ( 76 ).

5. Partie ( 12 ) de rotor selon la revendication 1, 2 ou 3, dans laquelle une extrémité ( 83 ) de l'axe ( 76 ) fait saillie en partie du trou ( 27 ) de la deuxième surface ( 29 ) latérale et est reliée à complémentarité de forme à la tôle ( 77 ) de sécurité.

6. Partie ( 12 ) de rotor suivant la revendication 5, dans laquelle, la face frontale en saillie de l'axe ( 76 ) est munie d'au moins une saillie ( 93 ) qui peut être accrochée par l'extrémité de la tôle ( 77 ) de sécurité réalisée d'une manière correspondante à la saillie ( 93 ).

7. Partie ( 12 ) de rotor selon l'une des revendications 5 ou 6, dans laquelle pour mettre fin à la complémentarité de forme il faut surmonter une force minimum entre l'axe ( 77 ) et la tôle ( 76 ) de sécurité.

8. Partie ( 12 ) de rotor, selon la revendication 1 ou 2, dans laquelle la tôle ( 77 ) de sécurité est en forme de U en ayant deux branches ( 79 ) de tôle à extrémité libre,
dans laquelle il est prévu respectivement un trou ( 81 ) pour l'axe ( 76 ) dans chaque branche ( 79 ) de la tôle.

9. Partie ( 12 ) de rotor, selon la revendication 1, 2 ou 8, dans laquelle le trou ( 81 ) de la tôle ( 77 ) de sécurité à une ouverture à la manière d'un trou de serrure ayant un diamètre petit et un diamètre grand et dans lequel l'axe ( 76 ) a un diamètre plus grand que le grand diamètre du trou de serrure et est muni d'une rainure ( 87 ) annulaire, sans fin, faisant le tour, dans laquelle la tôle ( 77 ) de sécurité pénètre par son trou de serrure.

10. Partie ( 12 ) de rotor, suivant l'une des revendications précédentes, constituée en disque ( 10 ) de rotor.
